(19) Europäisches Patentamt
European Patent Office
Office européen des brevets

(11) **EP 1 783 257 B1**

(12) **FASCICULE DE BREVET EUROPEEN**

(45) Date de publication et mention
de la délivrance du brevet:
**22.04.2009 Bulletin 2009/17**

(51) Int Cl.:
***D04H 13/00*** *(2006.01)* ***B32B 5/26*** *(2006.01)*

(21) Numéro de dépôt: **06291656.4**

(22) Date de dépôt: **25.10.2006**

(54) **Stratifié non tisse-elastomère-non tissé**

Vliesstofflaminatextrudiertes Elastomer

Complex nonwoven web- extruded elastomeric product

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.11.2005 FR 0511343**

(43) Date de publication de la demande:
**09.05.2007 Bulletin 2007/19**

(73) Titulaire: **Aplix**
**75008 Paris (FR)**

(72) Inventeur: **Marche, Thierry**
**44450 La Chapelle-Basse-Mer (FR)**

(74) Mandataire: **Eidelsberg, Olivier Nathan et al**
**Cabinet Aymard & Coutel,**
**22 Avenue de Friedland**
**75008 Paris (FR)**

(56) Documents cités:
**EP-A2- 0 936 061        EP-A2- 1 153 737**
**WO-A-95/17302        WO-A-98/02610**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention se rapporte à un stratifié comportant au moins un film élastique, notamment à base d'élastomère, notamment thermoplastique, et au moins une couche de non tissé. Ces stratifiés sont particulièrement utilisés dans des applications dans le domaine des vêtements, en particulier jetables, tels que des couches-culottes ou des dispositifs pour l'incontinence des adultes ou dans le domaine médical sous forme de bandeau élastique. Dans le domaine des couches-culottes, ces stratifiés sont classiquement utilisés dans les parties formant la ceinture autour de la taille du bébé. Dans le cas d'une application aux couches-culottes particulièrement avantageuse, ces stratifiés sont utilisés pour réaliser les pattes ou oreilles élastiques assurant le maintien de la couche sur le bébé et supportant entre autres un élément auto-agrippant.

On souhaite que ce stratifié soit élastique dans le sens transversal (c'est-à-dire le sens s'étendant d'une oreille à l'autre) au moins, pour permettre un bon maintien de la couche-culotte autour de la taille du bébé. Les stratifiés actuels sont, en général, constitués d'un film en matière élastique ou élastomère qui, en général, est pris en sandwich entre deux couches de non tissé. Pour permettre une fabrication à grande échelle des couches-culottes, il est nécessaire actuellement de dérouler ce film élastomère à partir d'une bobine pour l'amener entre les deux couches de non tissé pour les fixer mutuellement, par exemple par laminage, par exemple par l'intermédiaire d'une colle. Cependant, ce procédé présente l'inconvénient qu'il est nécessaire de prévoir dans la construction du film au moins une couche extérieure, de préférence deux, formant des peaux, qui sont en un matériau relativement peu élastique et possédant entre autres des propriétés de non collage ou de non adhérence, ce qui permet ainsi d'enrouler le film élastomère sur lui-même en des bobines, pour le dérouler facilement lors de la fabrication des stratifiés constitués de ce film élastomère et des deux non tissés. Les stratifiés que l'on connaît aujourd'hui sont ainsi constitués d'un film élastique, revêtu d'au moins une couche extérieure en un matériau sensiblement non élastique, et d'une couche de non tissé fixée à la dite au moins une couche extérieure.

Ce genre de stratifié de l'art antérieur est complexe à fabriquer en raison de la présence de la ou des couches formant peaux et, en outre, du fait que la ou les peaux étant choisies, en ce qui concerne leur matériau, pour qu'elles aient des qualités d'adhérence suffisamment faible pour permettre un enroulement du film, entouré des peaux, en une bobine puis de la dérouler facilement; Lors de la fabrication du stratifié, il est nécessaire, pour ensuite coller cette peau aux non tissés extérieurs, d'utiliser des colles dites techniques notamment à pouvoir tackifiant élevé et/ou à fort grammage, par exemple supérieur à 12gsm. De manière générale, il est nécessaire d'effectuer des traitements de surface, tel qu'un traitement Corona ou à torche plasma.

Après formation du stratifié, il est nécessaire de prévoir un traitement mécanique particulier, appelé « activation » par la suite, pour permettre à l'ensemble stratifié constitué par le film élastomère, les peaux et les non tissés, d'avoir une élasticité suffisante, telle que requise pour pouvoir ajuster la ceinture d'une couche-culotte autour de la taille d'un bébé et ce malgré le caractère peu élastique des matières choisies pour la peau et les non tissés. Ce processus d'activation consiste à étirer le stratifié transversalement au sens machine, en étirant au delà de la limite élastique la ou les peaux et le ou les non tissés. Lorsque l'étirage cesse, le film élastique et le stratifié dans son ensemble reprend une largeur supérieure ou égale à celle avant étirage, mais les peaux et le ou les non tissés ont été étirées de manière irrémédiable, de sorte que le stratifié dans son ensemble a désormais une élasticité transversale, et peut être étiré au moins jusqu'à la largeur à laquelle les peaux et le ou les non tissés ont été étirées de manière irréversible.

Il est également connu dans l'art antérieur des stratifiés formés par extrusion directe du film élastique sur le non tissé, la fixation se faisant par durcissement de la matière élastique sur les fibres des non tissés. Dans ce cas également, il est nécessaire de réaliser une « activation » que supporte mal les non tissés, qui après l'activation présentent un toucher rugueux, qui tend à irriter la peau du porteur de la couche culotte, notamment les bébés. En outre, cette extrusion directe est difficile à mettre en oeuvre, et en particulier le film élastique extrudé sous forme d'une matière visqueuse chaude a tendance à détériorer le non tissé, au point que des fibres du non tissés entrent en fusion, rendant la surface du non tissé rigide et sont noyées dans le film élastique.

La présente invention vise à surmonter les inconvénients de l'art antérieur en visant à obtenir un stratifié comportant au moins un film en matière élastique ou élastomère et au moins une couche de non tissé, de préférence deux couches de non tissé de part et d'autre du film, qui peut être fabriqué aussi rapidement qu'avec les procédés actuels tout en ne nécessitant pas la présence de peaux pour permettre de le dérouler à partir d'une bobine dans le processus de fabrication, et dont les non tissés, après activation, présentent un excellent toucher, et notamment sont doux au toucher et n'irrite pas la peau du porteur de la couche, notamment un bébé.

Suivant l'invention, on fabrique le stratifié en préparant le film élastique en l'extrudant à partir d'une filière d'extrusion pour obtenir, après refroidissement, un film sensiblement solide, en laminant le film sensiblement solide sur une couche de non tissé en interposant un agent de fixation, puis en étirant le stratifié transversalement pour casser les fibres du ou des non tissés et/ou la cohésion entre elles.

Ainsi, il n'est plus nécessaire d'une part de dérouler le film à partir d'une bobine, et donc de prévoir des peaux de protection, et d'autre part sans pour autant avoir à extruder le film directement sur le non tissé, de sorte que le non tissé n'est pas détérioré. Les peaux n'étant plus nécessaires, le film élastique est par conséquent plus fin.

De préférence, le stratifié, après activation du ou des non tissés, a une rémanence inférieure à 15%, de préférence inférieure à 10%, plus préférentiellement inférieure à 5% pour un étirement de 100% de la largeur initiale.

De préférence, l'agent de fixation, notamment de la colle, est déposé par bandes transversales, séparées les unes des autres, notamment en étant sensiblement jointives.

Ainsi lors de l'étirage transversal, les fibres de non tissés ont tendance à s'agglutiner sur les bandes de colles après avoir été désolidarisées les unes des autres par l'étirage, de sorte que le non tissé, à l'état étiré du stratifié, présente des premières zones d'une première épaisseur égale ou supérieure à l'épaisseur initiale du non tissé (avant étirage du stratifié) et des deuxièmes zones d'une deuxième épaisseur plus petite que l'épaisseur initiale du non tissé.

La présente invention se rapporte aussi à un stratifié comportant au moins un film élastique ayant une largeur et au moins une couche de non tissé fixée au film au moins sur ladite largeur, par interposition directe d'un agent de fixation, notamment de la colle, la au moins une couche de non tissé ayant une surface extérieure éloignée du film, caractérisé en ce que la surface extérieure de la au moins une couche de non tissé est, à l'état étiré du stratifié, ondulée, comportant des zones de crête et des zones de creux, de l'agent de fixation étant disposé entre les zones de crête et le film élastique.

Suivant un mode de réalisation préféré de l'invention, les zones de creux sont sensiblement sans non tissé à l'état étiré.

Le stratifié dans son ensemble présente maintenant un toucher très doux, aussi bien à l'état étiré que non étiré. En outre ; le stratifié est plus agréable en utilisation, la possibilité d'élongation étant plus importante, et notamment moins ou pas limitée par le non tissé ou la peau, de sorte que l'utilisateur a plus de « réserve » d'élasticité, ce qui, lorsqu'il ferme par exemple une ceinture de couche culotte, lui permet de la disposer au mieux autour de la taille du bébé, ce qui s'avère plus agréable pour lui. Enfin, le non tissé supporte mieux la cassure, et est doux au toucher et notamment n'irrite pas la peau. Au sens de l'invention, on entend par « de l'agent de fixation étant disposé entre les zones de crête et le film » que lorsque l'on trace une droite perpendiculairement à la surface du film, celle ci s'étend du film à une crête du non tissé en passant par de l'agent de fixation.

Suivant l'invention, il n'y a plus de peau déformable non élastique, ni de vernis entre la colle et le film élastique, ce qui simplifie la fabrication du stratifié d'une part et permet d'autre part d'obtenir un stratifié particulièrement élastique et agréable à porter et à utiliser.

Suivant un mode de réalisation préféré, l'agent de fixation, notamment de la colle, est déposé sous la forme d'une part de premières bandes séparées les unes des autres, de préférence parallèles, et ayant un premier grammage, et d'autre part de deuxième bandes intercalées entre les premières bandes, les deuxièmes bandes ayant un deuxième grammage inférieur au premier grammage, de préférence le deuxième grammage étant inférieur à 50% du premier grammage, de sorte qu'après étirage transversal le non tissé est cassé et les fibres de non tissé s'accumulent au dessus des premières bandes, tandis qu'au niveau des deuxièmes bandes, à l'état étiré du stratifié, les fibres de non tissés sont en moindre quantité.

Suivant un autre mode de réalisation préféré, l'agent de fixation est déposé sous la forme de bandes séparées les unes des autres par des zones intermédiaires sans agent de fixation ou sans colle, en particulier les bandes étant jointives, de sorte que les zones de crête se trouvent au niveau des bandes d'agent de fixation, tandis que les zones de creux se trouvent au niveau des zones intermédiaires.

Suivant un perfectionnement de l'invention, le stratifié, après activation, a une rémanence inférieure à 15%, de préférence inférieure à 10%, plus préférentiellement inférieure à 5%, après une élongation de 100% de la largeur initiale.

Suivant un mode de réalisation préféré, la surface extérieure de la au moins une couche est sensiblement plane à l'état non étiré du stratifié.

Suivant un mode de réalisation préféré, la ou les zones de crête est (sont) d'une épaisseur constante.

Suivant un mode de réalisation préféré, la ou les zones de creux est (sont) d'une épaisseur constante, notamment nulle.

Suivant un perfectionnement de l'invention, le film élastique est homogène, au moins dans la direction de son épaisseur. Cela signifie que lorsque l'on se place à un point quelconque de la surface du film, le film sur toute son épaisseur à cet endroit donné est en une même formulation, avec des propriétés identiques.

Suivant un autre perfectionnement de l'invention, le film élastique est multicouches de matières élastiques.

Suivant un perfectionnement de l'invention, l'épaisseur du film élastique est variable dans le sens d'étirement du stratifié (sens transversal), notamment en vue d'obtenir un allongement régulièrement réparti dans le cas particulier d'une patte découpée suivant une forme donnée, ou en vue de maîtriser par zone l'élasticité du stratifié.

Suivant un mode de réalisation préféré de l'invention, le au moins un film élastique a du côté de la au moins une couche une surface qui en coupe longitudinale, c'est à dire perpendiculairement à la direction de ladite largeur, a la forme d'une ligne, notamment droite, l'ensemble des fibres du non tissé se trouvant du côté de la ligne opposé au film élastique.

La présente invention se rapporte également à une couche-culotte comportant un stratifié suivant l'invention, notamment au niveau de la ceinture destinée à entourer la taille du bébé.

De préférence, l'agent de fixation interposé entre chaque couche de non tissé et le film, est une colle, de préférence de nature chimique similaire à la matière du film élastomère, notamment à base de SIS, SBS, SEBS, SIBS ou SEPS, facilitant l'adhésion avec le film élastique. Suivant un autre mode de réalisation possible la colle est une colle réactive, telle qu'une PU réticulable permettant d'obtenir de meilleures caractéristiques en tenue en température (Fluage).

On décrit maintenant, à titre d'exemple, des modes de réalisation de l'invention en se reportant aux dessins, dans lesquels :

la figure 1 est une vue en coupe d'un stratifié suivant l'invention, transversalement à la direction machine ou de déroulement de celui ci,
la figure 2 est une vue en perspective d'une installation de fabrication d'un stratifié suivant l'invention,
la figure 3 est un schéma représentant un échantillon de matériau élastique ou élastomère préparé pour réalisation du test d'hystérésis permettant la détermination du SET d'un matériau élastique,
la figure 4 représente la forme de la courbe d'hystérésis obtenue lors de la réalisation du test permettant la détermination du SET par calcul,
la figure 5 représente un stratifié suivant l'invention, après cassure, à l'état non étiré, et
la figure 6 représente le stratifié de la figure 5 à un état étiré, et
la figure 7 représente une variante d'un stratifié suivant l'invention, après cassure, à l'état non étiré, et
la figure 8 représente le stratifié de la figure 7 à un état étiré.

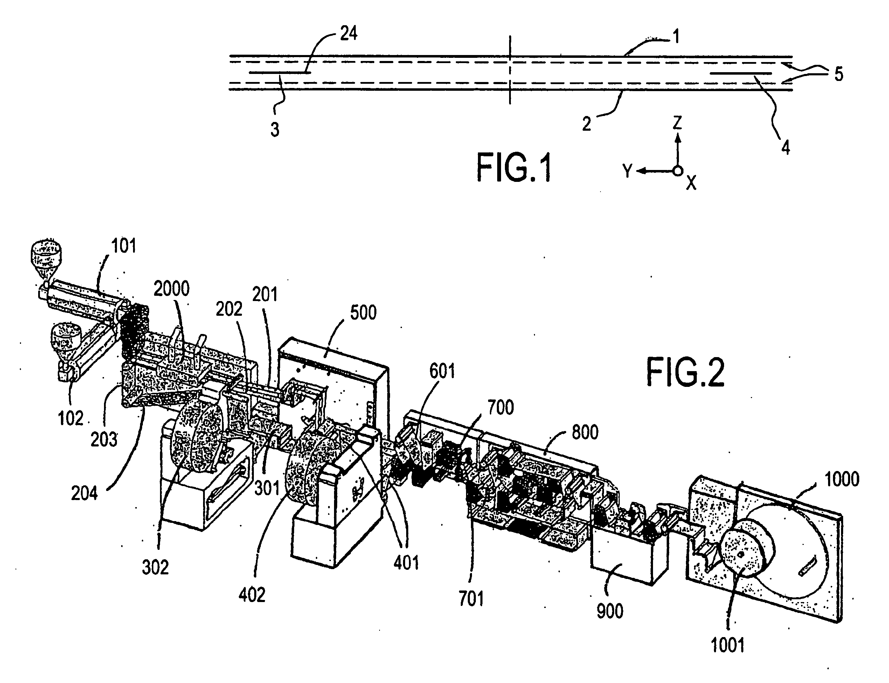

A la figure 1 il est représenté, suivant une vue en coupe, transversalement à la direction machine (direction des X), c'est-à-dire la direction des Y dans laquelle s'étend en longueur le stratifié suivant l'invention. Ce stratifié est constitué de deux couches de non tissé 1 et 2 ayant une grande largeur, par exemple ici une largeur de 350 mm. Deux films élastomères 3, 4 de petite largeur, par exemple de 35 à 40 mm, sont pris en sandwich entre les deux couches de non tissé. Deux couches de colle 5 fixent chaque non tissé à une des faces des films élastomères et, lorsqu'il n'y a pas de film élastomère, dans la région centrale, à l'autre non tissé.

Les couches de colle ont la forme de bandes parallèles les unes aux autres, à distance les unes des autres, distance qui peut être nulle et comprise par exemple entre 0 mm et 2 mm.

Après formation du stratifié, les deux couches de non tissé, au niveau du au moins un film élastomère, sont activés par passage entre des rouleaux d'activation, c'est-à-dire que ces deux non tissés dans la partie recouvrant le au moins un film élastomère, sont cassés de façon préférentielle en cross direction ( ou direction transversale) pour former des sortes de sillons dans le sens transversal pour que, au niveau des deux élastomères, le stratifié ait une élasticité dans la direction transversale correspondant sensiblement à celles des films élastomères.

Pour effectuer cette cassure, on fait passer le stratifié en le tenant dans sa partie centrale, où l'on souhaite effectuer la formation des sillons, par application d'une bande élastique qui plaque le stratifié en le recouvrant, et on étire ensuite le stratifié et la bande élastique qui est en contact avec lui en les déformant pour désolidariser les unes des autres les fibres du non tissé du stratifié, en cassant ainsi le non tissé, le film élastique et la bande élastique, pendant cet étirage par déformation, s'étirant simplement élastiquement. Une fois la déformation terminée, le film élastique et la bande élastique reviennent non déformés à leur position initiale, tandis que le non tissé est cassé de manière permanente.

Après la désolidarisation (décohésion des fibres les unes aux autres), les fibres du non tissés on tendance à se regrouper au niveau des bandes de colles, pour former des monticules de non tissés, tandis que entre les bandes de colle les fibres de non tissés, en raison de la cassure, se font plus rares et sont plus clairsemées, voire ne sont plus présentes. On a ainsi des zones de crête 22 (au niveau des bandes de colle), où le non tissé est d'une plus grande épaisseur que dans les zones intermédiaires (là où il n'y a pas de colle) ou zones de creux 23, où éventuellement, à l'extrême, il peut ne plus y avoir de non tissé. A l'état non étiré du stratifié, les zones de plus grande épaisseur viennent en contact latéral (par leur bord parallèle à la direction transversale) les unes avec les autres, et, lorsque qu'on étire le stratifié, les zones de plus grande épaisseur s'éloignent les unes des autres, les zones intermédiaires apparaissant alors, soit sans non tissé, soit avec une plus petite épaisseur de non tissé. Ainsi à l'état non étiré, à l'exception de lignes discrètes au niveau des cassures, la surface 25 extérieure de la couche de non tissé est sensiblement plane, à l'exception des lignes discrètes 23 correspondantes aux cassures réalisées au niveau des zones sans colle.

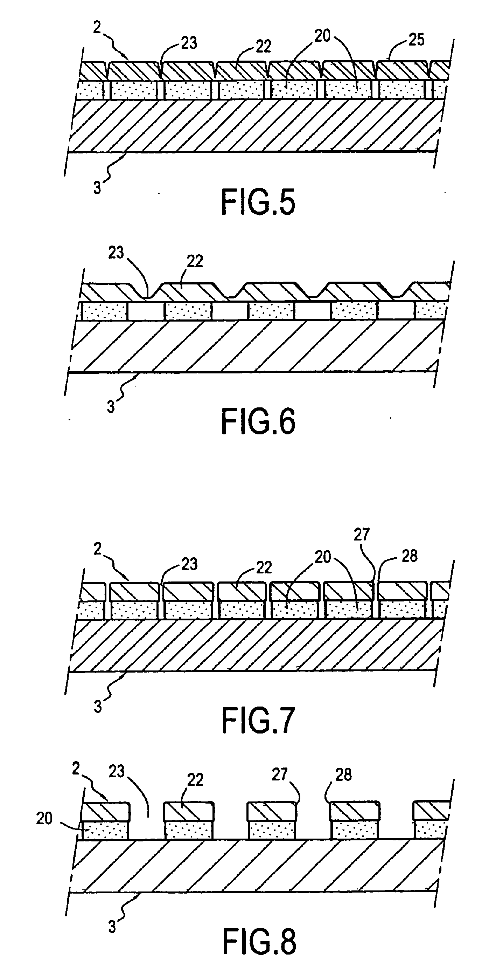

A la figure 5, on peut ainsi voir les bandes 20 de colle, à distance les unes des autres, et le non tissé 2 comporte des zones 22 de crête de plus grande épaisseur (par rapport à l'épaisseur du non tissé avant cassure) et des zones 23 de creux de plus petite épaisseur (par rapport à l'épaisseur du non tissé avant cassure) qui apparaissent mieux lorsqu'on étire le stratifié (figure 6).

Le film élastique a une largeur i perpendiculairement au sens de dépose sur le non tissé. Il a une surface, du côté du non tissé 2, de forme plane. En section longitudinale, cette surface a la forme d'une droite 24. Aucune fibre du non tissé n'est noyée dans la matière du film élastique, et toutes les fibres sont d'un même côté de la droite 24, et ce quelle que soit la section longitudinale. Le non tissé a également, à l'état non étiré une surface intérieure (du côté du film) sensiblement plane.

A l'état non étiré, les bords 27,28 extérieurs supérieurs des parties de crête mutuellement séparés par les parties de creux à l'état étiré viennent sensiblement en contact les uns avec les autres, de sorte que l'impression donné à l'utilisateur est que la surface supérieure du non tissé, constituée par l'ensemble des zones de crêtes, est sensiblement plane et lisse.

Aux figures 7 et 8, il est représenté un mode de réalisation dans lequel dans les parties de crête il n'y a sensiblement plus de non tissé, l'ensemble du non tissé étant agglutiné au dessus des parties de colle pour former les parties de crête. A l'état étiré, les parties de crête sont constituées de non tissé et de colle, et sont séparées les unes des autres par des parties de creux sans non tissé et sans colle. A l'état non étiré, les parties de crête viennent sensiblement en contact latéral les unes avec les autres pour donner l'impression à l'utilisateur d'une surface supérieure sensiblement lisse et plane. Les parties représentées aux figures 7 et 8 équivalentes à celles du mode de réalisation des figures 5 et 6 portent les mêmes références numériques.

C'est surtout une élasticité dans la direction transversale qui est recherchée.

On a décrit ici le fait que les deux films élastomères sont de petite largeur par rapport à une grande largeur des non tissés. On pourrait également prévoir, cependant, un seul film élastomère de même largeur que les deux couches de non tissé ou plus de deux films élastomères dont les largeurs cumulées seraient inférieures ou égales à celle du non tissé.

L'épaisseur (mesurée dans la direction des Z) du film élastomère est ici constante le long de la direction des Y (cross direction ou direction transversale). Cependant, on pourrait également prévoir une épaisseur qui varie dans cette direction transversale.

Le matériau élastique peut présenter ou non des caractéristiques thermorétractables. Il peut être formé, en particulier, à partir de polymères, tels que des copolymères de différents types de motif de monomères, par exemple alterné tel que A-B, ou séquencé, par exemple A-A-A-B-B-B, ou statistique, par exemple A-A-B-A-B-B-A-A-A-B-A, dont l'ensemble du réseau obtenu peut avoir différentes structures, soit linéaires de type A-B-A, soit radiales de type (A-B)n, indice n (n>2), soit diblock de type A-B qui sont élastomères, par exemple les copolymères styrène/isoprène (SI), styrène/isoprène/styrène (SIS), styrène/butadiène/styrène (SBS), styrène-éthylène/butylène-styrène (SEBS), styrène-éthylène/propylène-styrène (SEPS) ou SIBS. Des mélanges de ces élastomères les uns avec les autres ou avec des non élastomères modifiant certaines caractéristiques autres que l'élasticité peuvent également être pris en compte. Par exemple jusqu'à 50 % en poids mais, de préférence, moins de 30 % en poids de polymère peuvent être ajoutés afin de modifier certaines caractéristiques des matériaux de base (élasticité, tenue à la chaleur, processabilité, tenue aux UV, colorant,... ), tels que des polyvinyles styrène, des polystyrènes ou des poly α-méthyl-styrène, polyesters époxy, polyoléfines, par exemple des polyéthylènes ou certains acétates d'éthylène/vinyle, de préférence ceux de poids moléculaire élevé.

Le matériau élastique peut être, notamment, un styrène-isoprène-styrène, disponible par exemple auprès de la Société Kraton Polymers, sous la dénomination KRATON D(Marque déposée), ou de la société DEXCO POLYMERS LP sous la dénomination VECTOR SBC 4211 (Marque déposée). On peut également utiliser un élastomère thermoplastique de polyuréthane, notamment le PELLATHANE (Marque déposée) 2102-75A de la Société The Dow Chemical Company. On peut utiliser également un styrène-butadiène-styrène, notamment le KRATON D-2122 (Marque déposée) de la société Kraton Polymers , ou le VECTOR SBC 4461 (Marque déposée) de la société Dexco Polymers LP. On peut aussi utiliser un styrène-éthylène/butylène, notamment le KRATON G-2832 (Marque déposée) de la société Kraton Polymers, ou un copolymère séquencé styrène-éthylène-butylène-styrène (SEBS), notamment le KRATON (Marque déposée) G2703. On peut également utiliser un copolymère d'acrylate d'isooctyle et d'acide acrylique suivant des rapports de monomère de 90110. On peut également utiliser un copolymère séquencé polyamide polyéther PEBAX (Marque déposée) 2533 de la société Arkema.

D'autres matériaux possibles sont des polymères polyoléfines, principalement des copolymères d'éthylène et/ou propylène, ayant des caractéristiques des élastomères, notamment issus de la catalyse métallocène, tel le VISTAMAXX VM-1120 (Marque déposée), disponible auprès de la société Exxon Mobil Chemical ou encore des polymères chargés EPDM du type Santoprène.

On peut, suivant l'invention, utiliser une colle telle que des colles hot melt non réactive, par exemple la H2511 de Bostick, ou une colle PU réactive, notamment la AX75E de Bostik. De préférence, ces colles auront une nature chimique similaire au film élastomère décrit ci dessus. Par exemple, si on analyse une de ces colles avec un spectromètre à Infra rouge, pour identifier les fonctions chimiques, ou une chromatographie liquide pour séparer et quantifier les substances, on retrouvera de préférence des traces d'un ou des composants ou de leurs dérivés de la matière ou des matières du film élastomère.

De préférence, ces colles sont à base de SIS, SBS, SEBS et SEPS, permettent une bonne affinité avec le film par des matières chimiques similaires.

De préférence la couche de colle a un grammage inférieur à $15g/m^2$, notamment inférieur à $12g/m^2$, plus préférablement inférieur à $8g/m^2$.

A la place de la colle, comme agent de fixation on peut prévoir des bandes au niveau desquelles est réalisée une soudure à ultra son ou par fusion. La matière intermédiaire fondue faisant alors office d'agent de fixation au sens de l'invention.

Concernant les non tissés, on peut utiliser du polypropylène, du polyester et tout autres matériaux habituels dans le domaine ; Il est aussi possible de jouer sur l'élongation à la rupture transversale des non tissés pour faciliter au maximum l'activation.

Suivant un autre mode de réalisation possible de l'invention, le non tissé peut être tel qu'il ait une grande extensibilité dans une direction, notamment la direction transversale à la direction machine. Pour obtenir un non tissé de ce genre, on dispose des fibres de non tissé sensiblement toutes dans la même direction machine et on les lie ensemble soit par des points de fusion éloignés les uns des autres, soit par jets d'eau permettant de les entremêler pour les lier ensemble. Ainsi, le non tissé a t'il la capacité à être étendu dans une direction. Lorsqu'on le lie avec des bandes de colle à un film élastique, on obtient ainsi un composite ayant une élasticité entre la position de repos dans laquelle les fibres s'étendent toutes sensiblement dans la même direction et une position étendue dans laquelle les fibres ne s'étendent plus dans cette direction de départ. Une extensibilité de 200% dans une direction est souhaitable.

Un premier non tissé possible est un non tissé dit Spunlace, 100% en fibres de Polypropylène ou en un mélange de Polypropylène et de Polyéthylène, d'un poids de base de 25 à 30 g/m$^2$, les fibres du non tissé ont été liées ensemble par jet d'eau. Les fibres sont nettement orientées dans la direction machine, de sorte que le non tissé est résistant dans cette direction et extensible dans la direction transversale. Un non tissé de ce genre est disponible de la société Sandler sous la référence Sawatex (marque déposée) 2628.

Un autre non tissé possible est un non tissé cardé 100% en fibres de Polypropylène de poids de base de 22 à 27 g/m$^2$. Les fibres sont liés entre elles par des points de fusion de petite dimension et espacés les uns des autres. Les fibres sont nettement orientées dans la direction machine, de sorte que le non tissé est résistant dans cette direction et extensible dans la direction transversale. Un non tissé de ce genre est disponible auprès de la société BBA Fiberweb sous la référence FPN 571 D.

A la figure 2, il est représenté une installation de fabrication d'un stratifié suivant l'invention: l'installation comporte deux extrudeurs 101, 102, qui forment par extrusion deux rubans 201, 202, de films élastomères qui, après refroidissement dans une unité 2000 de refroidissement intermédiaire, par des systèmes à courroies 203 et galets 204 régulés en température sont transportés vers deux rouleaux qui reçoivent en même temps deux couches de non tissé 301 et 401 pour y être fixés par collage de la matière élastomère entre les non tissés dans une unité de fixation 500. Le non tissé 301 est déroulé à partir d'une bobine 302. Le deuxième non tissé 401 est déroulé d'une bobine 402. le complexe constitué des non tissé 301 et 401 et des films élastiques 201, 202, à savoir le complexe 601, est ensuite découpé à la bonne largeur dans un système de découpe 700 en largeur comportant des couteaux 701 circulaires, puis passe dans une unité de soudure 800, permettant une soudure des bords longitudinaux. Dans le cas où l'on utilise des non tissés devant être activés, on peut le faire par exemple dans une unité 900 d'activation, dans laquelle le stratifié est étiré transversalement à la direction machine de sorte que les bandes de colle ont tendance à s'éloigner les unes des autres avec les zones de non tissés au dessus d'elles tandis que les fibres au dessus des zones entre deux bandes de colle ont tendance à se casser pour permettre l'éloignement des bandes. On obtient au final un stratifié ayant deux types de zone, des zones très élastiques (entre les bandes de colle) ayant peu de fibres de non tissé, et des zones peu élastiques (au dessus des bandes de colle) ayant beaucoup de non tissé. On peut également réaliser l'activation comme décrit dans le brevet US-A-4834741 en utilisant des rouleaux dentés, le stratifié passant entre les dentures de deux rouleaux en opposition, et les deux dentures engrenant l'une dans l'autre pour réaliser l'étirage. Il convient de noter que dans ce cas là cependant, ce ne sont pas les dentures qui sont à l'origine des parties élastiques en forme de sillons ayant peu de non tissé mais bien le positionnement initial des bandes de colle.

A la sortie de l'unité 900 d'activation, le stratifié dans son ensemble est enroulé sur un enrouleur 1000 en un rouleau 1001 qui pourra ensuite être amené directement sur les unités de fabrication des couches culottes pour la dépose sur une couche culotte.

Alors que le film est extrudé et non encore laminé, on peut appliquer un étirage en température pour augmenter la vitesse de ligne et réduire le grammage. La vitesse de la ligne peut être de l'ordre de 250 à 500m/mn.

En outre, si l'on souhaite réaliser dans la partie centrale (dans le sens de la direction longitudinale), entre les deux films disposés latéralement, une partie en matériau plastique supplémentaire, "appelée Finger Lift" on pourrait prévoir une troisième extrudeuse pour former une troisième bande de film thermoplastique. Cette bande Finger Lift n'est pas nécessairement en un matériau élastique. Elle peut en particulier être en polypropylène. Sa fonction est de permettre l'ouverture faciale de la patte du système auto-agrippant et le rigidifier.

Pour déterminer la rémanence, ou SET, on utilise la méthode suivante :

On conditionne l'échantillon dans une atmosphère normale, telle que définie dans la norme ASTDM 5170, température de 23°C $\pm$ 2°C et humidité relative de 50% $\pm$ 5%.

On utilise comme appareillage un dynamomètre conforme à la norme EN 10002, notamment le Synergie 200H, 1 colonne disponible auprès de la société MTS Systems Corp, U.S.A., conjointement avec un logiciel d'utilisation TESTWORKS 4.04 B.

On prépare l'échantillon en découpant au cutter ou aux ciseaux le produit élastique (par exemple le stratifié de l'invention) en un échantillon de 45mm de largeur dans le sens MD (direction de la machine, perpendiculairement au plan de la figure 1) et une longueur dans le sens CD (direction transversale, direction horizontale à la figure 1) de 60mm.

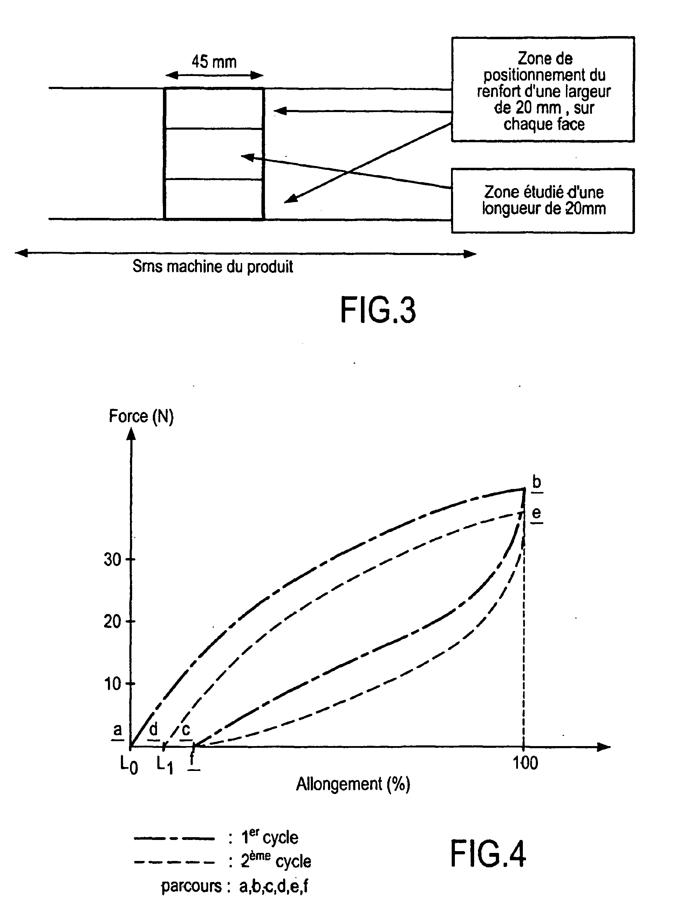

On positionne des renforts (anti-glissement) par exemple une couche de non tissé, pour éviter le glissement et l'amorce de rupture de l'échantillon entre les mâchoires en les fixant avec du double face de part et d'autre de la zone élastique à tester et de chaque côté, comme représenté schématiquement à la figure 3 ;

Les paramètres sont sélectionnés comme suit :

Distance inter mâchoires : 20mm
Vitesse machine : 254 mm/mn
Nombre de cycles : 2
Allongement du produit : 100% à vitesse constante

On étire le produit à 100% par déplacement vertical de la mâchoire supérieure, la mâchoire inférieure étant fixe, puis on le maintien dans la position pendant 30 secondes, puis on revient à la position initiale à vitesse constante où on le laisse 60 secondes (fin du premier cycle), puis on l'étire de nouveau à 100%, on le maintien pendant 30 secondes et on revient à la position initiale (fin du deuxième cycle). On obtient alors la courbe donnant la force d'étirement en fonction de l'allongement en %, celle-ci présentant une hystérésis qui permet de déterminer le Set par la formule de calcul suivante :

$$SET = L1 - L0$$

Avec :

L0 : Point d'intersection avec l'axe des X (Allongement en %) lors du démarrage du test, soit le début du premier cycle.
L1 : Point d'intersection avec l'axe des X (Allongement en %) lors du démarrage du deuxième cycle après le retour à la position d'origine et l'attente de 60 secondes.

Un non tissé est une surface textile obtenue par le liage mécanique et/ou chimique et/ou thermique de fibres textiles disposées en nappes, en excluant le tissage ou le tricotage (cf Lexique des fils et des étoffes, ISBN : 2-9509924-1-2).

Ainsi, un non tissé est un amas de fibres de petites dimensions qui sont associées les unes aux autres par compactage mécanique, par mélange avec un liant ou par fusion partielle du non tissé. Lorsque l'on étire le non tissé suivant l'invention pour l'activer, on sépare les petites fibres compactées les unes aux autres pour les désolidariser les unes des autres. Cette désolidarisation entraîne une cassure du non tissé. Les fibres ne sont pas nécessairement étirées et d'ailleurs en général, compte tenu de leur taille, ne le sont pas. Si on veut les étirer, on peut éventuellement utiliser un système d'activation dit par « incrément ». Cependant, ce système nécessite une installation complexe, avec des rouleaux dentées qui engrènent les un dans les autres, et suivant l'invention, on peut s'en dispenser.

On entend suivant l'invention par film élastique un film qui a, suivant le test précédent, une rémanence ou SET inférieure à 15%, de préférence inférieure à 10%, plus préférablement inférieure à 5% pour un étirement de 100% de sa largeur initiale et qui, après avoir été étiré à 100% revient en une forme sensiblement identique à celle qu'il avait avant l'étirement, et notamment ne comporte pas d'ondulation, ni ne comporte de zones de plus grandes épaisseurs que d'autres zones, et en particulier a une surface extérieure sensiblement lisse, c'est à dire ne comportant pas d'aspérité d'extension supérieure à l'ordre du micron, notamment pas d'aspérité de dimension en hauteur supérieure à 5 microns. En particulier le film élastique n'est pas microtexturé.

On entend par matière élastique une matière telle qu'un film, constitué uniquement de cette matière, est élastique. L'élasticité est la propriété physique d'un corps de reprendre sa forme initiale après suppression de la sollicitation.

On entend par interposition directe de l'agent de fixation, que celui ci est en contact direct d'une part avec le film élastique. De préférence, il l'est également avec le non tissé.

**Revendications**

1. Stratifié comportant au moins un film élastique (3, 4) ayant une largeur et au moins une couche (1,2) de non tissé fixée au film au moins sur ladite largeur, par interposition directe d'un agent de fixation, notamment de la colle, la au moins une couche de non tissé ayant une surface (25) extérieure éloignée du film, **caractérisé en ce que** la surface (25) extérieure de la au moins une couche de non tissé est, à l'état étiré du stratifié, ondulée, comportant des zones (22) de crête et des zones (23) de creux, de l'agent (20) de fixation étant disposé entre les zones de crête et le film élastique.

2. Stratifié suivant la revendication 1, **caractérisé en ce que** à l'état non étiré du stratifié, la surface (25) extérieure est sensiblement plane.

3. Stratifié suivant la revendication 1 ou 2, **caractérisé en ce que** l'agent de fixation, notamment de la colle, est déposé sous la forme d'une part de premières bandes séparées les unes des autres, de préférence parallèles, et ayant un premier grammage, et d'autre part de deuxième bandes intercalées entre les premières bandes, les deuxièmes bandes ayant un deuxième grammage inférieur au premier grammage, de préférence le deuxième grammage étant inférieur à 50% du premier grammage, de sorte qu'après étirage transversal le non tissé est cassé et les fibres de non tissé s'accumulent au dessus des premières bandes pour former les zones de crête, tandis qu'au niveau des deuxièmes bandes, à l'état étiré du stratifié, les fibres de non tissés sont en moindre quantité pour former les zones de creux.

4. Stratifié suivant la revendication 1 ou 2, **caractérisé en ce que** l'agent de fixation est déposé sous la forme de bandes séparées les unes des autres par des zones intermédiaires sans agent de fixation ou sans colle, en particulier les bandes étant jointives, de sorte que les zones de crête se trouvent au niveau des bandes d'agent de fixation, tandis que les zones de creux se trouvent au niveau des zones intermédiaires.

5. Stratifié suivant l'une des revendications 1 à 4, **caractérisé en ce que** le stratifié, après activation de la au moins une couche de non tissé, a une rémanence inférieure à 15%, de préférence inférieure à 10%, plus préférentiellement inférieure à 5%, après une élongation de 100% de la largeur initiale.

6. Stratifié suivant l'une des revendications 1 à 5, **caractérisé en ce que** la ou les zones de crête est (sont) d'épaisseur constante.

7. Stratifié suivant l'une des revendications précédentes, **caractérisé en ce que** l'agent de fixation est constitué d'une couche de la matière de la surface du non tissé tournée du côté du film qui a été fondue par soudage, notamment par ultra sons.

8. Stratifié suivant l'une des revendications 1 à 6, **caractérisé en ce que** l'agent de fixation interposé entre la au moins une couche de non tissé et le film est une colle ayant un grammage inférieur à 12 g/m$^2$, notamment inférieur à 8 g/m$^2$.

9. Stratifié suivant l'une des revendications précédentes, **caractérisé en ce que** les fibres du au moins un non tissé ne sont pas noyées même partiellement dans la matière du au moins un film élastique.

10. Stratifié suivant l'une des revendications précédentes, **caractérisé en ce que** le au moins un film élastique a du côté de la au moins une couche de non tissé une surface qui en coupe longitudinale, c'est à dire perpendiculairement à la direction de ladite largeur, a la forme d'une ligne, notamment droite, l'ensemble des fibres de la au moins une couche de non tissé se trouvant du côté de la ligne opposé au film élastique.

11. Stratifié suivant l'une des revendications précédentes, **caractérisé en ce que** des renforts sont réalisés parallèlement au film élastique pour rigidifier des zones du non tissé, les renforts étant adjacents au film élastique.

12. Procédé de fabrication d'un stratifié suivant l'une des revendications 1 à 11, qui comporte les étapes qui consistent à préparer le film élastique en l'extrudant à partir d'une filière d'extrusion pour obtenir, après refroidissement, un film sensiblement à l'état solide, à laminer le film sensiblement à l'état solide sur une couche de non tissé avec interposition d'un agent de fixation, et à casser le stratifié transversalement pour désolidariser les fibres du ou des non tissés.

13. Procédé suivant la revendication 12, **caractérisé en ce que** l'agent de fixation, notamment de la colle, est déposé par bandes transversales, séparées les unes des autres, notamment en étant sensiblement jointives.

14. Procédé suivant la revendication 9 ou 10, **caractérisé en ce que** l'étirage pour désolidariser les fibres du non tissé s'effectue en maintenant le stratifié au niveau, et notamment au dessus, du film élastique.

15. Procédé suivant la revendication 12, 13 ou 14, **caractérisé en ce que** il est prévu un tapis de refroidissement ayant un motif, celui ci étant transférer au film élastique extrudé lors du refroidissement.

## Claims

1. Laminate comprising at least one elastic film (3, 4) having a width and at least one layer (1, 2) of non-woven fabric fixed to the film at least on said width through direct interposition of a fixing agent, in particular adhesive, the at least one layer of non-woven fabric having an outer surface (25) which is at a distance from the film, **characterised in that** the outer surface (25) of the at least one layer of non-woven fabric is, in the stretched state of the laminate, corrugated, comprising ridge zones (22) and hollow zones (23), whereby fixing agent (20) is provided between the ridge zones and the elastic film.

2. Laminate according to claim 1, **characterised in that**, in the non-stretched state of the laminate, the outer surface (25) is substantially planar.

3. Laminate according to claim 1 or 2, **characterised in that** the fixing agent, particularly adhesive, is applied in the form on the one hand of first bands separated from each other, preferably being parallel, and having a first grammage and on the other hand second bands, arranged between the first bands, the second bands having a second grammage which is lower than the first grammage, whereby the second grammage is preferably less than 50% of the first grammage, in such a way that after transverse stretching the non-woven fabric is broken and the fibres of non-woven fabric accumulate on top of the first bands in order to form ridge zones, whereas on the second bands, in the stretched state of the laminate, the fibres of non-woven fabrics are in a smaller quantity so as to form hollow zones.

4. Laminate according to claim 1 or 2, **characterised in that** the fixing agent is applied in the form of bands separated from each other by intermediate zones without fixing agent or without adhesive, whereby the bands are jointive in particular, in such a way that the ridge zones are on the bands of fixing agent whereas the hollow zones are on the intermediate zones.

5. Laminate according to one of the zones 1 to 4, **characterised in that** the laminate, after activation of the at least one sheet of non-woven fabric, has a remanence of less than 15%, preferably less than 10%, more preferably less than 5%, after an elongation of 100% of the initial width.

6. Laminate according to one of the claims 1 to 5, **characterised in that** the ridge zone(s) is / are of a constant thickness.

7. Laminate according to one of the preceding claims, **characterised in that** the fixing agent is constituted by a layer of material of the surface of the non-woven fabric facing the side of the film which has been melted by soldering, in particular by ultrasound.

8. Laminate according to one of the claims 1 to 6, **characterised in that** the fixing agent interposed between the at least one sheet of non-woven fabric and the film is an adhesive having a grammage of less than 12g/m2, in particular less than 8 g/m2.

9. Laminate according to one of the preceding claims, **characterised in that** the fibres of the at least one non-woven fabric are not submerged even partially in the material of the at least one elastic film.

10. Laminate according to one of the preceding claims, **characterised in that** the at least one elastic film has, on the side of the at least one sheet, a surface which in longitudinal cross-section, that is to say perpendicularly to the direction of said width, has the form of a line, particularly a straight line, whereby all the fibres of the at least one sheet of non-woven fabric are on the side of the line opposing the elastic film.

11. Laminate according to one of the preceding claims, **characterised in that** reinforcements are realised parallel to the elastic film in order to make zones of the non-woven fabric rigid, whereby the reinforcements are adjacent to the elastic film.

12. Production method for a laminate according to one of the claims 1 to 11 which comprises steps which consist in preparing the elastic film by extruding it from an extrusion die in order to obtain, after cooling, a film which is substantially in the solid state, in laminating the film substantially in the solid state on a sheet of non-woven fabric with interposition of a fixing agent, and in breaking the laminate transversely so that the fibres of the non-woven fabric(s) break away from each other.

13. Method according to claim 12, **characterised in that** the fixing agent, in particular adhesive, is applied in transverse bands which are separated from each other, in particular being jointive.

14. Method according to claim 9 or 10, **characterised in that** the stretching so as to break the fibres of the non-woven fabric away from each other is carried out in keeping the laminate at the level of, and particularly on top of, the elastic film.

15. Method according to claim 12, 13 or 14, **characterised in that** a cooling mat with a design is provided, whereby this is transferred to the extruded elastic film during cooling.


**Patentansprüche**

1. Schichtstoff, umfassend mindestens einen elastischen Film (3, 4), der eine Breite aufweist, und mindestens eine Schicht (1, 2) eines Faservlieses, das an dem Film mindestens über dessen Breite unter direkter Vermittlung eines Befestigungsmittels, insbesondere Klebstoff, befestigt ist, wobei die mindestens eine Schicht eines Faservlieses eine vom Film abgewandte äußere Oberfläche (25) aufweist, **dadurch gekennzeichnet, dass** die äußere Oberfläche (25) der mindestens einen Schicht eines Faservlieses in gedehntem Zustand des Schichtstoffs gewellt ist, wobei sie Kammzonen (22) und Vertiefungszonen (23) umfasst, wobei sich das Befestigungsmittel (20) zwischen den Kammzonen und dem elastischen Film befindet.

2. Schichtstoff nach Anspruch 1, **dadurch gekennzeichnet, dass** die äußere Oberfläche (25) im nicht gedehnten Zustand des Schichtstoffs im Wesentlichen eben ist.

3. Schichtstoff nach Anspruch 1 oder 2, **dadurch gekennzeichnet, dass** das Befestigungsmittel, insbesondere Klebstoff, in der Form von voneinander getrennten, vorzugsweise parallelen ersten Streifen, die eine erste Gewichtsmenge aufweisen, und andererseits zwischen die ersten Streifen eingeschobene zweite Streifen, wobei die zweiten Streifen eine gegenüber der ersten Gewichtsmenge geringere zweite Gewichtsmenge aufweisen, wobei die zweite Gewichtsmenge vorzugsweise geringer als 50% der ersten Gewichtsmenge ist, derart aufgebracht ist, dass nach der Querdehnung das Faservlies gebrochen ist, und die Fasern des Faservlieses sich unterhalb der ersten Streifen unter Bildung der Kammzonen ansammeln, während die Fasern der Faservliese auf der Höhe der zweiten Streifen in gedehntem Zustand des Schichtstoffes in geringerer Menge unter Bildung von Vertiefungszonen vorhanden sind.

4. Schichtstoff nach Anspruch 1 oder 2, **dadurch gekennzeichnet, dass** das Befestigungsmittel in der Form von Streifen, die durch Zwischenzonen ohne Befestigungsmittel oder ohne Klebstoff voneinander getrennt sind, wobei die Streifen insbesondere aneinanderstoßend sind, derart aufgetragen ist, dass sich die Kammzonen auf der Höhe der Befestigungsmittelstreifen befinden, während sich die Vertiefungszonen auf der Höhe der Zwischenzonen befinden.

5. Schichtstoff nach einem der Ansprüche 1 bis 4, **dadurch gekennzeichnet, dass** der Schichtstoff nach der Aktivierung der mindestens einen Schicht eines Faservlieses nach einer Dehnung von 100% der ursprünglichen Breite eine Remanenz von geringer als 15%, vorzugsweise geringer als 10%, noch besser geringer als 5% aufweist.

6. Schichtstoff nach einem der Ansprüche 1 bis 5, **dadurch gekennzeichnet, dass** die Kammzone oder die Kammzonen von konstanter Dicke ist.

7. Schichtstoff nach einem der vorhergehenden Ansprüche, **dadurch gekennzeichnet, dass** das Befestigungsmittel aus einer Schicht des Materials der Oberfläche des Faservlieses, die der Filmseite zugewandt ist, die durch Schweißen, insbesondere durch Ultraschall, geschmolzen wurde.

8. Schichtstoff nach einem der Ansprüche 1 bis 6, **dadurch gekennzeichnet, dass** das Befestigungsmittel, das zwischen die mindestens eine Schicht eines Faservlieses und dem Film eingefügt ist, ein Klebstoff ist, der eine Gewichtsmenge von geringer als 12 g/m$^2$, insbesondere geringer als 8 g/m$^2$ aufweist.

9. Schichtstoff nach einem der vorhergehenden Ansprüche, **dadurch gekennzeichnet, dass** die Fasern des mindestens einen Faservlieses nicht einmal teilweise in das Material des mindestens einen elastischen Films eingegraben sind.

10. Schichtstoff nach einem der vorhergehenden Ansprüche, **dadurch gekennzeichnet, dass** der mindestens eine elastische Film auf der Seite der mindestens einen Schicht eines Faservlieses eine Oberfläche aufweist, die im Längsschnitt, d. h. senkrecht zur Richtung der Breite, die Form einer Linie, insbesondere einer Geraden aufweist, wobei sich die gesamten Fasern der mindestens einen Schicht eines Faservlieses auf der zum elastischen Film entgegengesetzten Seite der Linie befinden.

11. Schichtstoff nach einem der vorhergehenden Ansprüche, **dadurch gekennzeichnet, dass** Verstärkungen parallel zum elastischen Film zur Verstärkung der Zonen des Faservliese realisiert sind, wobei die Verstärkungen an den elastischen Film angrenzen.

12. Verfahren zur Herstellung eines Schichtstoffs nach einem der Ansprüche 1 bis 11, wobei das Verfahren die Stufen der Herstellung des elastischen Films durch Extrudieren desselben aus einer Extrusionsdüse, um nach dem Abkühlen einen im Wesentlichen im festen Zustand befindlichen Film zu erhalten, des Laminierens des Films in einem im Wesentlichen festen Zustand auf eine Schicht eines Faservlieses unter Vermittlung eines Befestigungsmittels und des Brechens des Schichtstoffs in Querrichtung zur Trennung der Fasern des Faservlieses oder der Faservliese umfasst.

13. Verfahren nach Anspruch 12, **dadurch gekennzeichnet, dass** das Befestigungsmittel, insbesondere Klebstoff, in Querstreifen, die voneinander getrennt sind, die insbesondere im Wesentlichen aneinanderstoßend sind, aufgetragen wird.

14. Verfahren nach Anspruch 9 oder 10, **dadurch gekennzeichnet, dass** die Dehnung zur Trennung der Fasern des Faservlieses durchgeführt wird, während der Schichtstoff auf der Höhe und insbesondere unterhalb des elastischen Films gehalten wird.

15. Verfahren nach Anspruch 12, 13 oder 14, **dadurch gekennzeichnet, dass** eine Kühlmatte angebracht ist aus dem Grund, diese auf den extrudierten elastischen Film während des Abkühlens zu übertragen.

**FIG.1**

**FIG.2**

EP 1 783 257 B1

45 mm

Zone de positionnement du renfort d'une largeur de 20 mm , sur chaque face

Zone étudié d'une longueur de 20mm

Sms machine du produit

# FIG.3

Force (N)

b

e

30

20

10

a   d   c

$L_0$   $L_1$   f

100

Allongement (%)

— ‒ — : 1$^{er}$ cycle

— — — — : 2$^{ème}$ cycle

parcours : a,b,c,d,e,f

# FIG.4

**FIG.5**

**FIG.6**

**FIG.7**

**FIG.8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4834741 A